# EUROPEAN PATENT SPECIFICATION

(11) **EP 4 418 653 B1**
(45) Date of publication and mention of the grant of the patent: **18.11.2026**
(21) Application number: 24185171.6
(22) Date of filing: 23.01.2019
(51) Int. Cl.: H04N 19/12, H04N 19/129, H04N 19/136, H04N 19/179, H04N 19/124, H04N 19/176, H04N 19/159

(54) **DATA ENCODING AND DECODING**
DATENCODIERUNG UND -DECODIERUNG
CODAGE ET DÉCODAGE DE DONNÉES

(30) Priority: 05.02.2018 GB 201801838
(43) Date of publication of application: 21.08.2024
(62) Document number(s) of the earlier application(s) in accordance with Art. 76 EPC: 19702673.5 / 3 750 309
(73) Proprietor: Sony Group Corporation, Tokyo 108-0075 (JP); Sony Europe B.V., Weybridge, Surrey KT13 0XW (GB)
(72) Inventor: SHARMAN, Karl James, Basingstoke, RG22 4SB (GB); PHILIPPE, Magali Kimlee Miri, Basingstoke, RG22 4SB (GB)
(74) Representative: D Young & Co LLP

(56) References cited:
- WO-A1-2006/102571
- WO-A1-2014/011894
- WO-A1-2015/044660
- US-A1- 2011 002 381
- US-A1- 2015 215 621
- US-A1- 2015 373 327
- US-A1- 2016 227 247
- US-A1- 2016 241 852
- "High Efficiency Video Coding (HEVC) Test Model 16 (HM 16) Encoder Description Update 9", no. n17047, 16 October 2017 (2017-10-16), XP030260346, Retrieved from the Internet <URL:http://phenix.int-evry.fr/mpeg/doc_end_user/documents/119_Torino/wg11/w17047.zip w17047.docx> [retrieved on 20171016]
- ANONYMOUS: "HIGH EFFICIENCY VIDEO CODING, ITU-T, vol.265 SERIES H: AUDIOVISUAL AND MULTIMEDIA SYSTEMS Infrastructure of audiovisual services - Coding of moving video", ITU-T STANDARD, RECOMMENDATION, 1 February 2018 (2018-02-01), CH, pages 1 - 672, XP055701552, Retrieved from the Internet <URL:https://www.itu.int/rec/T-REC-H.265-201802-S/en>

## Description

### BACKGROUND

### Field

This disclosure relates to image data encoding and decoding.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, is neither expressly or impliedly admitted as prior art against the present disclosure.

There are several video data encoding and decoding systems which involve transforming video data into a frequency domain representation, quantising the frequency domain coefficients and then applying some form of entropy encoding to the quantised coefficients. This can achieve compression of the video data. A corresponding decoding or decompression technique is applied to recover a reconstructed version of the original video data.

### Prior art includes:

US 2016/241852 A1;
"High Efficiency Video Coding (HEVC) Test Model 16 (HM 16) Encoder Description Update 9", 119. MPEG MEETING; 20170717-20170721; TORINO; (MOTION PICTURE EXPERT GROUP OR ISO/IEC JTC1/SC29/WG11), no. n17047 16 October 2017;
WO 2015/044660 A1; and
US 2011/002381 A1.

Each of these prior art disclosures describes a prior art device.

### SUMMARY

The present disclosure addresses or mitigates problems arising from this processing.

Respective aspects and features of the present disclosure are defined in the appended claims.

It is to be understood that both the foregoing general description and the following detailed description are exemplary, but are not restrictive, of the present technology.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an audio/video (A/V) data transmission and reception system using video data compression and decompression;
Figure 2 schematically illustrates a video display system using video data decompression;
Figure 3 schematically illustrates an audio/video storage system using video data compression and decompression;
Figure 4 schematically illustrates a video camera using video data compression;
Figures 5 and 6 schematically illustrate storage media;
Figure 7 provides a schematic overview of a video data compression and decompression apparatus;
Figure 8 schematically illustrates a predictor;
Figure 9 schematically illustrates a partially-encoded image;
Figure 10 schematically illustrates a set of possible intra-prediction directions;
Figure 11 schematically illustrates a set of prediction modes;
Figure 12 schematically illustrates another set of prediction modes;
Figure 13 schematically illustrates an intra-prediction process;
Figure 14 schematically illustrates an inter-prediction process;
Figure 15 schematically illustrates example scanning orders;
Figure 16 schematically illustrates a frequency transform process;
Figure 17 schematically illustrates a transform skip process;
Figures 18 and 19 are schematic flowcharts illustrating respective methods;
Figures 20 and 21 schematically illustrate portions of conventional encoders and decoders, respectively; and
Figures 22 and 23 schematically illustrate portions of encoders and decoders using the techniques of Figure 18 and 19, respectively.

### DESCRIPTION OF THE PREFERRED EMBODIMENTS

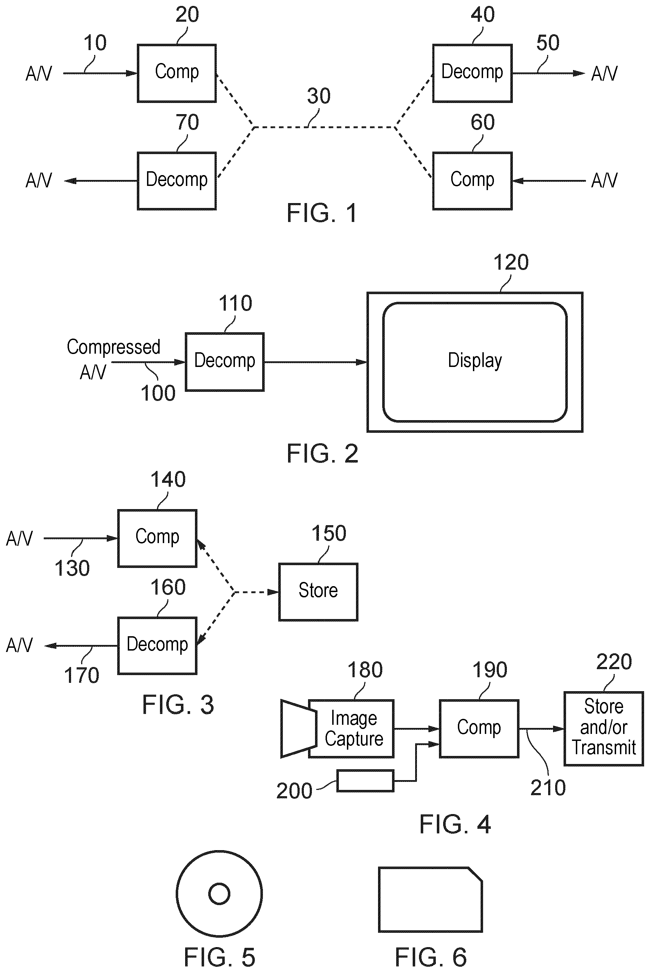

Referring now to the drawings, Figures 1-4 are provided to give schematic illustrations of apparatus or systems making use of the compression and/or decompression apparatus to be described below in connection with embodiments of the present technology.

All of the data compression and/or decompression apparatus to be described below may be implemented in hardware, in software running on a general-purpose data processing apparatus such as a general-purpose computer, as programmable hardware such as an application specific integrated circuit (ASIC) or field programmable gate array (FPGA) or as combinations of these. In cases where the embodiments are implemented by software and/or firmware, it will be appreciated that such software and/or firmware, and non-transitory data storage media by which such software and/or firmware are stored or otherwise provided, are considered as embodiments of the present technology.

Figure 1 schematically illustrates an audio/video data transmission and reception system using video data compression and decompression.

An input audio/video signal 10 is supplied to a video data compression apparatus 20 which compresses at least the video component of the audio/video signal 10 for transmission along a transmission route 30 such as a cable, an optical fibre, a wireless link or the like. The compressed signal is processed by a decompression apparatus 40 to provide an output audio/video signal 50. For the return path, a compression apparatus 60 compresses an audio/video signal for transmission along the transmission route 30 to a decompression apparatus 70.

The compression apparatus 20 and decompression apparatus 70 can therefore form one node of a transmission link. The decompression apparatus 40 and decompression apparatus 60 can form another node of the transmission link. Of course, in instances where the transmission link is uni-directional, only one of the nodes would require a compression apparatus and the other node would only require a decompression apparatus.

Figure 2 schematically illustrates a video display system using video data decompression. In particular, a compressed audio/video signal 100 is processed by a decompression apparatus 110 to provide a decompressed signal which can be displayed on a display 120. The decompression apparatus 110 could be implemented as an integral part of the display 120, for example being provided within the same casing as the display device. Alternatively, the decompression apparatus 110 maybe provided as (for example) a so-called set top box (STB), noting that the expression "set-top" does not imply a requirement for the box to be sited in any particular orientation or position with respect to the display 120; it is simply a term used in the art to indicate a device which is connectable to a display as a peripheral device.

Figure 3 schematically illustrates an audio/video storage system using video data compression and decompression. An input audio/video signal 130 is supplied to a compression apparatus 140 which generates a compressed signal for storing by a store device 150 such as a magnetic disk device, an optical disk device, a magnetic tape device, a solid state storage device such as a semiconductor memory or other storage device. For replay, compressed data is read from the storage device 150 and passed to a decompression apparatus 160 for decompression to provide an output audio/video signal 170.

It will be appreciated that the compressed or encoded signal, and a storage medium such as a machine-readable non-transitory storage medium, storing that signal, are considered as embodiments of the present technology.

Figure 4 schematically illustrates a video camera using video data compression. In Figure 4, an image capture device 180, such as a charge coupled device (CCD) image sensor and associated control and read-out electronics, generates a video signal which is passed to a compression apparatus 190. A microphone (or plural microphones) 200 generates an audio signal to be passed to the compression apparatus 190. The compression apparatus 190 generates a compressed audio/video signal 210 to be stored and/or transmitted (shown generically as a schematic stage 220).

The techniques to be described below relate primarily to video data compression and decompression. It will be appreciated that many existing techniques may be used for audio data compression in conjunction with the video data compression techniques which will be described, to generate a compressed audio/video signal. Accordingly, a separate discussion of audio data compression will not be provided. It will also be appreciated that the data rate associated with video data, in particular broadcast quality video data, is generally very much higher than the data rate associated with audio data (whether compressed or uncompressed). It will therefore be appreciated that uncompressed audio data could accompany compressed video data to form a compressed audio/video signal. It will further be appreciated that although the present examples (shown in Figures 1-4) relate to audio/video data, the techniques to be described below can find use in a system which simply deals with (that is to say, compresses, decompresses, stores, displays and/or transmits) video data. That is to say, the embodiments can apply to video data compression without necessarily having any associated audio data handling at all.

Figure 4 therefore provides an example of a video capture apparatus comprising an image sensor and an encoding apparatus of the type to be discussed below. Figure 2 therefore provides an example of a decoding apparatus of the type to be discussed below and a display to which the decoded images are output.

A combination of Figure 2 and 4 may provide a video capture apparatus comprising an image sensor 180 and encoding apparatus 190, decoding apparatus 110 and a display 120 to which the decoded images are output.

Figures 5 and 6 schematically illustrate storage media, which store (for example) the compressed data generated by the apparatus 20, 60, the compressed data input to the apparatus 110 or the storage media or stages 150, 220. Figure 5 schematically illustrates a disc storage medium such as a magnetic or optical disc, and Figure 6 schematically illustrates a solid state storage medium such as a flash memory. Note that Figures 5 and 6 can also provide examples of non-transitory machine-readable storage media which store computer software which, when executed by a computer, causes the computer to carry out one or more of the methods to be discussed below.

Therefore, the above arrangements provide examples of video storage, capture, transmission or reception apparatuses embodying any of the present techniques.

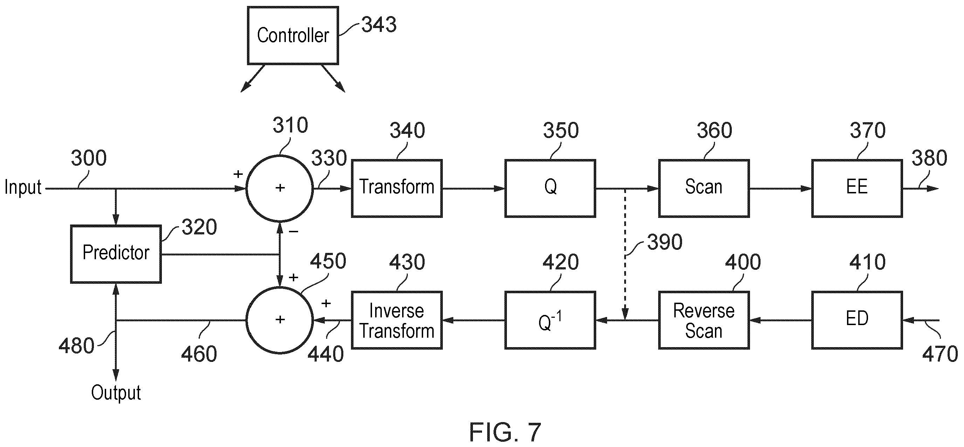

Figure 7 provides a schematic overview of a video data compression and decompression apparatus.

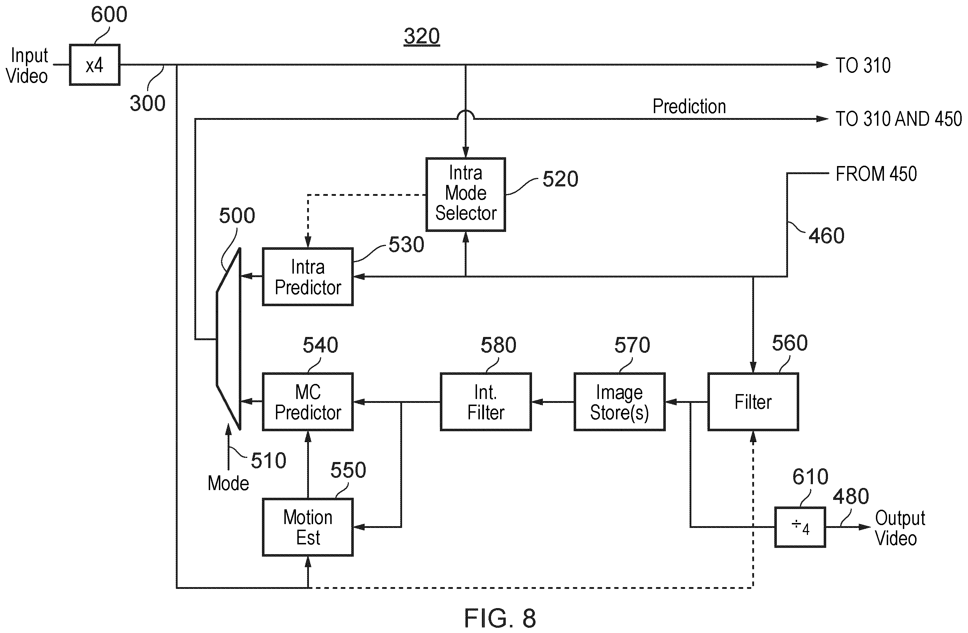

A controller 343 controls the overall operation of the apparatus and, in particular when referring to a compression mode, controls a trial encoding processes by acting as a selector to select various modes of operation such as block sizes and shapes, and whether the video data is to be encoded losslessly or otherwise. The controller is considered to part of the image encoder or image decoder (as the case may be). Successive images of an input video signal 300 are supplied to an adder 310 and to an image predictor 320. The image predictor 320 will be described below in more detail with reference to Figure 8. The image encoder or decoder (as the case may be) plus the intra-image predictor of Figure 8 may use features from the apparatus of Figure 7. This does not mean that the image encoder or decoder necessarily requires every feature of Figure 7 however.

The adder 310 in fact performs a subtraction (negative addition) operation, in that it receives the input video signal 300 on a "+" input and the output of the image predictor 320 on a "-" input, so that the predicted image is subtracted from the input image. The result is to generate a so-called residual image signal 330 representing the difference between the actual and projected images.

One reason why a residual image signal is generated is as follows. The data coding techniques to be described, that is to say the techniques which will be applied to the residual image signal, tend to work more efficiently when there is less "energy" in the image to be encoded. Here, the term "efficiently" refers to the generation of a small amount of encoded data; for a particular image quality level, it is desirable (and considered "efficient") to generate as little data as is practicably possible. The reference to "energy" in the residual image relates to the amount of information contained in the residual image. If the predicted image were to be identical to the real image, the difference between the two (that is to say, the residual image) would contain zero information (zero energy) and would be very easy to encode into a small amount of encoded data. In general, if the prediction process can be made to work reasonably well such that the predicted image content is similar to the image content to be encoded, the expectation is that the residual image data will contain less information (less energy) than the input image and so will be easier to encode into a small amount of encoded data.

The remainder of the apparatus acting as an encoder (to encode the residual or difference image) will now be described. The residual image data 330 is supplied to a transform unit or circuitry 340 which generates a discrete cosine transform (DCT) representation of blocks or regions of the residual image data. The DCT technique itself is well known and will not be described in detail here. Note also that the use of DCT is only illustrative of one example arrangement. Other transforms which might be used include, for example, the discrete sine transform (DST). A transform could also comprise a sequence or cascade of individual transforms, such as an arrangement in which one transform is followed (whether directly or not) by another transform. The choice of transform may be determined explicitly and/or be dependent upon side information used to configure the encoder and decoder.

In some examples, this represents the generation of an ordered array of data values representing an image region and having an array order. This process can include predicting an image region for an image to be encoded, by the predictor 320; and generating (by the adder 310) a residual image region dependent upon the difference between the predicted image region and a corresponding region of the image to be encoded.

The ordered array of data values can then comprise data values of a representation of the residual image region. In a so-called transform skip mode, a frequency transform is not used, but in other examples such as the DCT example given above (or in examples using other transforms such as the discrete sine transform (DST), or different transforms in orthogonal array directions, or with an optional additional non-separable secondary transform (NSST)), the generation of the ordered array also comprises frequency transforming the residual image region; in which the ordered array of data values comprises data values of a frequency-transformed representation of the residual image region. Inverse transforms (where appropriate) can be carried out on the dequantised data at decoding, and the resulting data combined with a predicted version of the image region (predicted using the same technique as that applied at encoding) to generate an output image region.

Non-separable secondary transforms (NSST) are discussed in "Algorithm Description of Joint Exploration Test Model 1", Chen et al, Joint Video Exploration Team (JVET) document JVET-A1001. In this document, an NSST is disclosed which represents a secondary transform applied between a forward core transform and quantization (at the encoder side) and between de-quantization and an inverse core transform (at the decoder side).

In example embodiments using one or more frequency transformations, the array order may be from a data value representing lowest spatial frequencies (such as a DC coefficient in the case of a DCT transformation) to a data value representing highest spatial frequencies. For example, a so-called zig-zag order may be used.

In other examples not using a frequency transform, the predicting step may comprise predicting samples of the image region in dependence upon other previously encoded and decoded image samples, displaced from the predicted samples in a direction defined by a prediction mode; and the array order can be such that predicted data values spatially closer to the other previously encoded and decoded image samples are earlier in the array order.

The output of the transform unit 340, which is to say, a set of DCT coefficients for each transformed block of image data, is supplied to a quantiser 350. Various quantisation techniques are known in the field of video data compression, ranging from a simple multiplication by a quantisation scaling factor through to the application of complicated lookup tables at a quantisation degree under the control of a quantisation parameter. The general aim is twofold. Firstly, the quantisation process reduces the number of possible values of the transformed data. Secondly, the quantisation process can increase the likelihood that values of the transformed data are zero. Both of these can make the entropy encoding process, to be described below, work more efficiently in generating small amounts of compressed video data.

As part of the quantisation process, a quantisation parameter (QP) is derived which indicates a quantisation degree so that the ordered array of data values, when encoded using that quantisation degree, meets one or more predetermined criteria. An example of such a predetermined criterion is a data quantity criterion, for example requiring that (at least a prediction of) the data quantity in the encoded bitstream resulting from such quantisation and subsequent entropy encoding is no greater than a certain limit.

The transformed data (or, in the case of a transform skip operation to be discussed below, reordered but not transformed residual data) are subject to a quantisation process which may be equivalent to division by a quantisation step size. (At decoding, the process of dequantisation can be viewed as equivalent to multiplication by the quantisation step size). The quantisation step size determines the degree or amount (for example, harshness) of quantisation which is applied. The quantisation step size is itself indicated by a quantisation parameter QP which is mapped to a quantisation step size. The mapping may be such that the quantisation step size is associated logarithmically to QP. For example, an increase in QP by 6 could indicate a doubling of the quantisation step size. However, different mappings could be used. the mapping can vary in dependence on (for example) bit depth (number of bits in a representation of each sample before encoding). So, for example, at a bit depth of 8 bits, a QP of 22 indicates or is mapped to a divide by 8 operation (quantisation step size = 8). At a bit depth of 10 bits, a QP of 22 indicates or is mapped to a divide by 32 operation (quantisation step size = 32). So, in example embodiments it is the QP value which is selected, for example in order to address one or more predetermined criteria, but then the degree of quantisation (related to the quantisation step size) is determined by a mapping of the QP value.

A data scanning process is applied by a scan unit 360. The purpose of the scanning process is to reorder the quantised transformed data so as to gather as many as possible of the non-zero quantised transformed coefficients together, and of course therefore to gather as many as possible of the zero-valued coefficients together. These features can allow so-called run-length coding or similar techniques to be applied efficiently. So, the scanning process involves selecting coefficients from the quantised transformed data, and in particular from a block of coefficients corresponding to a block of image data which has been transformed and quantised, according to a "scanning order" so that (a) all of the coefficients are selected once as part of the scan, and (b) the scan tends to provide the desired reordering. One example scanning order which can tend to give useful results is a so-called up-right diagonal scanning order.

The scanned coefficients are then passed to an entropy encoder (EE) 370. Again, various types of entropy encoding may be used. Two examples are variants of the so-called CABAC (Context Adaptive Binary Arithmetic Coding) system and variants of the so-called CAVLC (Context Adaptive Variable-Length Coding) system. In general terms, CABAC is considered to provide a better efficiency, and in some studies has been shown to provide a 10-20% reduction in the quantity of encoded output data for a comparable image quality compared to CAVLC. However, CAVLC is considered to represent a much lower level of complexity (in terms of its implementation) than CABAC. Note that the scanning process and the entropy encoding process are shown as separate processes, but in fact can be combined or treated together. That is to say, the reading of data into the entropy encoder can take place in the scan order. Corresponding considerations apply to the respective inverse processes to be described below.

The output of the entropy encoder 370, along with additional data (mentioned above and/or discussed below), for example defining the manner in which the predictor 320 generated the predicted image, provides a compressed output video signal 380.

However, a return path is also provided because the operation of the predictor 320 itself depends upon a decompressed version of the compressed output data.

The reason for this feature is as follows. At the appropriate stage in the decompression process (to be described below) a decompressed version of the residual data is generated. This decompressed residual data has to be added to a predicted image to generate an output image (because the original residual data was the difference between the input image and a predicted image). In order that this process is comparable, as between the compression side and the decompression side, the predicted images generated by the predictor 320 should be the same during the compression process and during the decompression process. Of course, at decompression, the apparatus does not have access to the original input images, but only to the decompressed images. Therefore, at compression, the predictor 320 bases its prediction (at least, for inter-image encoding) on decompressed versions of the compressed images.

The entropy encoding process carried out by the entropy encoder 370 is considered (in at least some examples) to be "lossless", which is to say that it can be reversed to arrive at exactly the same data which was first supplied to the entropy encoder 370. So, in such examples the return path can be implemented before the entropy encoding stage. Indeed, the scanning process carried out by the scan unit 360 is also considered lossless, but in the present embodiment the return path 390 is from the output of the quantiser 350 to the input of a complimentary inverse quantiser 420. In instances where loss or potential loss is introduced by a stage, that stage may be included in the feedback loop formed by the return path. For example, the entropy encoding stage can at least in principle be made lossy, for example by techniques in which bits are encoded within parity information. In such an instance, the entropy encoding and decoding should form part of the feedback loop.

In general terms, an entropy decoder 410, the reverse scan unit 400, an inverse quantiser 420 and an inverse transform unit or circuitry 430 provide the respective inverse functions of the entropy encoder 370, the scan unit 360, the quantiser 350 and the transform unit 340. For now, the discussion will continue through the compression process; the process to decompress an input compressed video signal will be discussed separately below.

In the compression process, the scanned coefficients are passed by the return path 390 from the quantiser 350 to the inverse quantiser 420 which carries out the inverse operation of the scan unit 360. An inverse quantisation and inverse transformation process are carried out by the units 420, 430 to generate a compressed-decompressed residual image signal 440.

The image signal 440 is added, at an adder 450, to the output of the predictor 320 to generate a reconstructed output image 460. This forms one input to the image predictor 320, as will be described below.

Turning now to the process applied to decompress a received compressed video signal 470, the signal is supplied to the entropy decoder 410 and from there to the chain of the reverse scan unit 400, the inverse quantiser 420 and the inverse transform unit 430 before being added to the output of the image predictor 320 by the adder 450. So, at the decoder side, the decoder reconstructs a version of the residual image and then applies this (by the adder 450) to the predicted version of the image (on a block by block basis) so as to decode each block. In straightforward terms, the output 460 of the adder 450 forms the output decompressed video signal 480. In practice, further filtering may optionally be applied (for example, by a filter 560 shown in Figure 8 but omitted from Figure 7 for clarity of the higher level diagram of Figure 7) before the signal is output.

The apparatus of Figures 7 and 8 can act as a compression (encoding) apparatus or a decompression (decoding) apparatus. The functions of the two types of apparatus substantially overlap. The scan unit 360 and entropy encoder 370 are not used in a decompression mode, and the operation of the predictor 320 (which will be described in detail below) and other units follow mode and parameter information contained in the received compressed bit-stream rather than generating such information themselves.

Figure 8 schematically illustrates the generation of predicted images, and in particular the operation of the image predictor 320.

There are two basic modes of prediction carried out by the image predictor 320: so-called intra-image prediction and so-called inter-image, or motion-compensated (MC), prediction. At the encoder side, each involves detecting a prediction direction in respect of a current block to be predicted, and generating a predicted block of samples according to other samples (in the same (intra) or another (inter) image). By virtue of the units 310 or 450, the difference between the predicted block and the actual block is encoded or applied so as to encode or decode the block respectively.

(At the decoder, or at the reverse decoding side of the encoder, the detection of a prediction direction may be in response to data associated with the encoded data by the encoder, indicating which direction was used at the encoder. Or the detection may be in response to the same factors as those on which the decision was made at the encoder).

Intra-image prediction bases a prediction of the content of a block or region of the image on data from within the same image. This corresponds to so-called I-frame encoding in other video compression techniques. In contrast to I-frame encoding, however, which involves encoding the whole image by intra-encoding, in the present embodiments the choice between intra- and inter- encoding can be made on a block-by-block basis, though in other embodiments the choice is still made on an image-by-image basis.

Motion-compensated prediction is an example of inter-image prediction and makes use of motion information which attempts to define the source, in another adjacent or nearby image, of image detail to be encoded in the current image. Accordingly, in an ideal example, the contents of a block of image data in the predicted image can be encoded very simply as a reference (a motion vector) pointing to a corresponding block at the same or a slightly different position in an adjacent image.

A technique known as "block copy" prediction is in some respects a hybrid of the two, as it uses a vector to indicate a block of samples at a position displaced from the currently predicted block within the same image, which should be copied to form the currently predicted block.

Returning to Figure 8, two image prediction arrangements (corresponding to intra- and inter-image prediction) are shown, the results of which are selected by a multiplexer 500 under the control of a mode signal 510 (for example, from the controller 343) so as to provide blocks of the predicted image for supply to the adders 310 and 450. The choice is made in dependence upon which selection gives the lowest "energy" (which, as discussed above, may be considered as information content requiring encoding), and the choice is signalled to the decoder within the encoded output data-stream. Image energy, in this context, can be detected, for example, by carrying out a trial subtraction of an area of the two versions of the predicted image from the input image, squaring each pixel value of the difference image, summing the squared values, and identifying which of the two versions gives rise to the lower mean squared value of the difference image relating to that image area. In other examples, a trial encoding can be carried out for each selection or potential selection, with a choice then being made according to the cost of each potential selection in terms of one or both of the number of bits required for encoding and distortion to the picture.

The actual prediction, in the intra-encoding system, is made on the basis of image blocks received as part of the signal 460, which is to say, the prediction is based upon encoded-decoded image blocks in order that exactly the same prediction can be made at a decompression apparatus. However, data can be derived from the input video signal 300 by an intra-mode selector 520 to control the operation of the intra-image predictor 530.

For inter-image prediction, a motion compensated (MC) predictor 540 uses motion information such as motion vectors derived by a motion estimator 550 from the input video signal 300. Those motion vectors are applied to a processed version of the reconstructed image 460 by the motion compensated predictor 540 to generate blocks of the inter-image prediction.

Accordingly, the units 530 and 540 (operating with the estimator 550) each act as detectors to detect a prediction direction in respect of a current block to be predicted, and as a generator to generate a predicted block of samples (forming part of the prediction passed to the units 310 and 450) according to other samples defined by the prediction direction.

The processing applied to the signal 460 will now be described. Firstly, the signal is optionally filtered by a filter unit 560, which will be described in greater detail below. This involves applying a "deblocking" filter to remove or at least tend to reduce the effects of the block-based processing carried out by the transform unit 340 and subsequent operations. A sample adaptive offsetting (SAO) filter may also be used. Also, an adaptive loop filter is optionally applied using coefficients derived by processing the reconstructed signal 460 and the input video signal 300. The adaptive loop filter is a type of filter which, using known techniques, applies adaptive filter coefficients to the data to be filtered. That is to say, the filter coefficients can vary in dependence upon various factors. Data defining which filter coefficients to use is included as part of the encoded output data-stream.

The filtered output from the filter unit 560 in fact forms the output video signal 480 when the apparatus is operating as a decompression apparatus. It is also buffered in one or more image or frame stores 570; the storage of successive images is a requirement of motion compensated prediction processing, and in particular the generation of motion vectors. To save on storage requirements, the stored images in the image stores 570 may be held in a compressed form and then decompressed for use in generating motion vectors. For this particular purpose, any known compression / decompression system may be used. The stored images are passed to an interpolation filter 580 which generates a higher resolution version of the stored images; in this example, intermediate samples (sub-samples) are generated such that the resolution of the interpolated image is output by the interpolation filter 580 is 4 times (in each dimension) that of the images stored in the image stores 570 for the luminance channel of 4:2:0 and 8 times (in each dimension) that of the images stored in the image stores 570 for the chrominance channels of 4:2:0. The interpolated images are passed as an input to the motion estimator 550 and also to the motion compensated predictor 540.

The way in which an image is partitioned for compression processing will now be described. At a basic level, an image to be compressed is considered as an array of blocks or regions of samples. The splitting of an image into such blocks or regions can be carried out by a decision tree, such as that described in SERIES H: AUDIOVISUAL AND MULTIMEDIA SYSTEMS Infrastructure of audiovisual services - Coding of moving video High efficiency video coding Recommendation ITU-T H.265 12/2016. Also: High Efficiency Video Coding (HECV) algorithms and Architectures, Editors: Madhukar Budagavi, Gary J. Sullivan, Vivienne Sze; ISBN 978-3-319-06894-7. In some examples, the resulting blocks or regions have sizes and, in some cases, shapes which, by virtue of the decision tree, can generally follow the disposition of image features within the image. This in itself can allow for an improved encoding efficiency because samples representing or following similar image features would tend to be grouped together by such an arrangement. In some examples, square blocks or regions of different sizes (such as 4x4 samples up to, say, 64x64 or larger blocks) are available for selection. In other example arrangements, blocks or regions of different shapes such as rectangular blocks (for example, vertically or horizontally oriented) can be used. Other non-square and non-rectangular blocks are envisaged. The result of the division of the image into such blocks or regions is (in at least the present examples) that each sample of an image is allocated to one, and only one, such block or region.

The intra-prediction process will now be discussed. In general terms, intra-prediction involves generating a prediction of a current block of samples from previously-encoded and decoded samples in the same image.

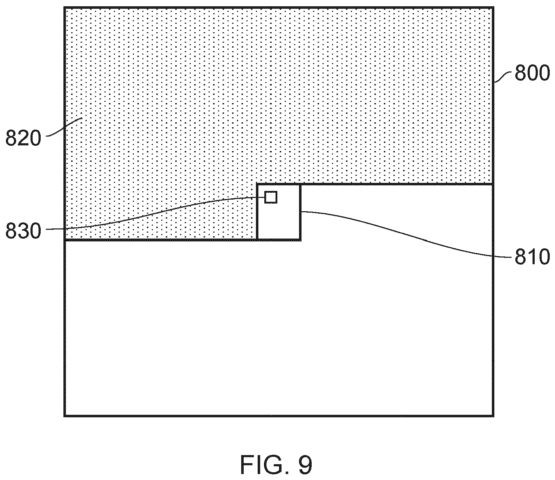

Figure 9 schematically illustrates a partially encoded image 800. Here, the image is being encoded from top-left to bottom-right on a block by block basis. An example block encoded partway through the handling of the whole image is shown as a block 810. A shaded region 820 above and to the left of the block 810 has already been encoded. The intra-image prediction of the contents of the block 810 can make use of any of the shaded area 820 but cannot make use of the unshaded area below that.

In some examples, the image is encoded on a block by block basis such that larger blocks (referred to as coding units or CUs) are encoded in an order such as the order discussed with reference to Figure 9. Within each CU, there is the potential (depending on the block splitting process that has taken place) for the CU to be handled as a set of two or more smaller blocks or transform units (TUs). This can give a hierarchical order of encoding so that the image is encoded on a CU by CU basis, and each CU is potentially encoded on a TU by TU basis. Note however that for an individual TU within the current coding tree unit (the largest node in the tree structure of block division), the hierarchical order of encoding (CU by CU then TU by TU) discussed above means that there may be previously encoded samples in the current CU and available to the coding of that TU which are, for example, above-right or below-left of that TU.

The block 810 represents a CU; as discussed above, for the purposes of intra-image prediction processing, this may be subdivided into a set of smaller units. An example of a current TU 830 is shown within the CU 810. More generally, the picture is split into regions or groups of samples to allow efficient coding of signalling information and transformed data. The signalling of the information may require a different tree structure of sub-divisions to that of the transform, and indeed that of the prediction information or the prediction itself. For this reason, the coding units may have a different tree structure to that of the transform blocks or regions, the prediction blocks or regions and the prediction information. In some examples such as HEVC the structure can be a so-called quad tree of coding units, whose leaf nodes contain one or more prediction units and one or more transform units; the transform units can contain multiple transform blocks corresponding to luma and chroma representations of the picture, and prediction could be considered to be applicable at the transform block level. In examples, the parameters applied to a particular group of samples can be considered to be predominantly defined at a block level, which is potentially not of the same granularity as the transform structure.

The intra-image prediction takes into account samples coded prior to the current TU being considered, such as those above and/or to the left of the current TU. Source samples, from which the required samples are predicted, may be located at different positions or directions relative to the current TU. To decide which direction is appropriate for a current prediction unit, the mode selector 520 of an example encoder may test all combinations of available TU structures for each candidate direction and select the prediction direction and TU structure with the best compression efficiency.

The picture may also be encoded on a "slice" basis. In one example, a slice is a horizontally adjacent group of CUs. But in more general terms, the entire residual image could form a slice, or a slice could be a single CU, or a slice could be a row of CUs, and so on. Slices can give some resilience to errors as they are encoded as independent units. The encoder and decoder states are completely reset at a slice boundary. For example, intra-prediction is not carried out across slice boundaries; slice boundaries are treated as image boundaries for this purpose.

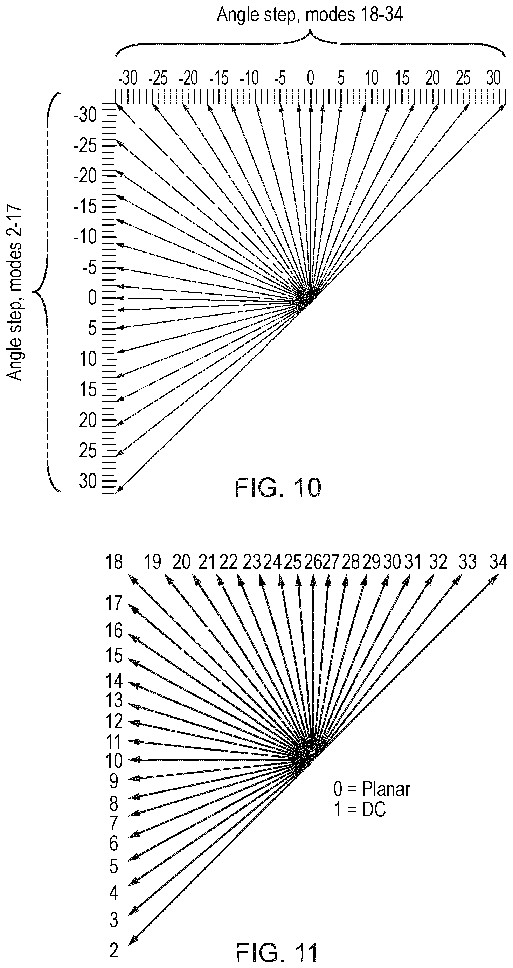

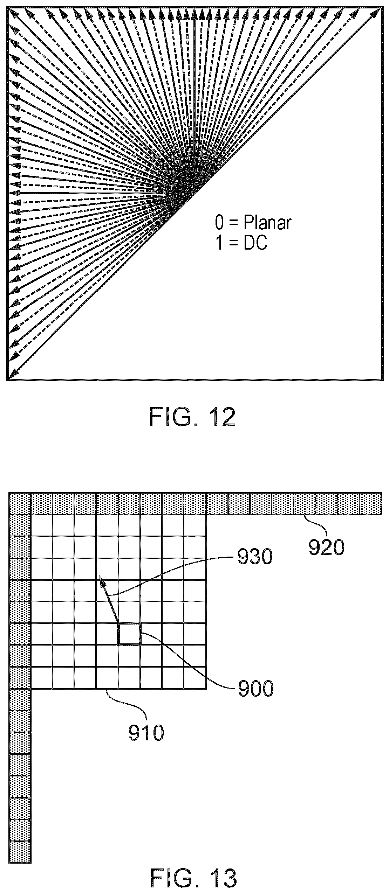

Figure 10 schematically illustrates a set of possible (candidate) prediction directions. The full set of candidate directions is available to a prediction unit. The directions are determined by horizontal and vertical displacement relative to a current block position, but are encoded as prediction "modes", a set of which is shown in Figure 11. Note that the so-called DC mode represents a simple arithmetic mean of the surrounding upper and left-hand samples. Note also that the set of directions shown in Figure 10 is just one example; in other examples, a set of (for example) 65 angular modes plus DC and planar (a full set of 67 modes) as shown schematically in Figure 12 makes up the full set. Other numbers of modes could be used.

In general terms, after detecting a prediction direction, the systems are operable to generate a predicted block of samples according to other samples defined by the prediction direction. In examples, the image encoder is configured to encode data identifying the prediction direction selected for each sample or region of the image (and the image decoder is configured to detect such data).

Figure 13 schematically illustrates an intra-prediction process in which a sample 900 of a block or region 910 of samples is derived from other reference samples 920 of the same image according to a direction 930 defined by the intra-prediction mode associated with that sample. The reference samples 920 in this example come from blocks above and to the left of the block 910 in question and the predicted value of the sample 900 is obtained by tracking along the direction 930 to the reference samples 920. The direction 930 might point to a single individual reference sample but in a more general case an interpolated value between surrounding reference samples is used as the prediction value. Note that the block 910 could be square as shown in Figure 13 or could be another shape such as rectangular.

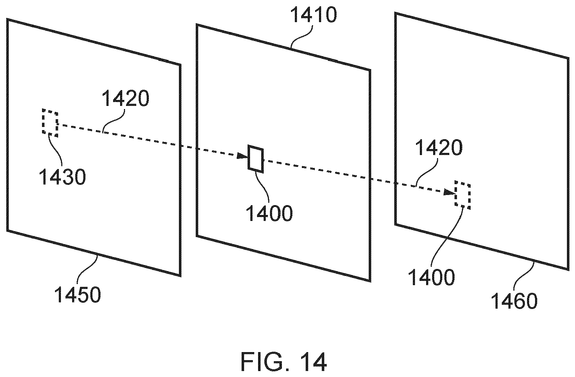

Figure 14 schematically illustrates an inter-prediction process, in which a block or region 1400 of a current image 1410 is predicted with respect to a block 1430, 1440 or both, pointed to by a motion vector 1420 in one or more other images 1450, 1460. The predicted block can be used as discussed above in the generation of residual data which is encoded as described above.

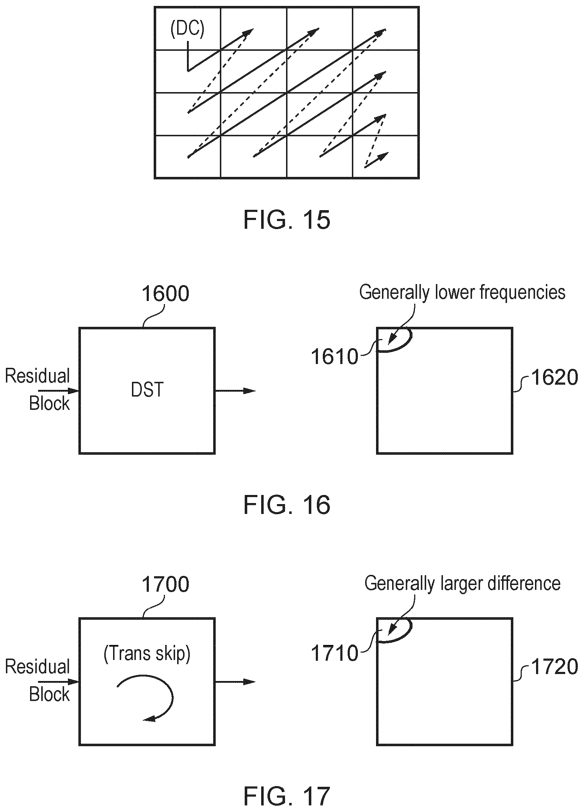

Figure 15 provides an example of an array order associated with an example 4x4 block of data. This order is not necessarily the processing order for each aspect of encoding or decoding processing mentioned above, but is associated with the block or region for the purposes of detecting the presence of significant non-zero coefficients in the array order in the manner to be described below. Differently-sized and/or differently-shaped blocks or regions may have corresponding associated array orders, and in at least some examples the array orders are arranged to be in an order of expected significance (magnitude, from expected greatest towards expected lowest) of the coefficients to be quantised.

The example of Figure 15 relates to a discrete cosine transform as applied to a residual block, in which the top-left coefficient (as drawn) is a DC (lowest spatial frequency) coefficient, generally expected to be the largest magnitude of the coefficients. Other examples including discrete sine transform (DST) and so-called transform-skip blocks will be discussed below.

A potential problem can arise in the case of (for example) a DCT block that has only a DC coefficient which is non-zero. This is not an uncommon situation and can result in the coded coefficient actually being bigger than the actual residual DC which the system is attempting to encode (in the spatial domain).

For example, for QP<22, the quantiser would be applying a division by a factor less than 8 (assuming no additional scalings are applied, by, for example, scaling lists / quantisation matrices). However, the DCT process for an 8x8 block would apply an effective scaling of sqrt(8x8)=8 during the transformation. This would then result in a DC coefficient that was larger in magnitude than the actual DC offset. Or, for 16x16 blocks, the DCT would cause a residual block with an effective DC value to be scaled by 16, and hence the coded coefficient value is at least twice the size of the resulting DC residual value.

That is to say, if a 16x16 residual block consisted of just the value '1' in every location, after the transformation, the transform DC coefficient would contain the value '16', with all other transformed coefficients being '0'. The quantiser would then scale the coefficients as required. However, if the quantiser is only applying a division of 8, the resulting quantised coefficient would be of the value '2', which is twice as accurate as required to invert the operation. Therefore in this case, the quantiser could have equally applied a division of 16 and yet result in the same (or similar) outcome. Therefore the minimum quantisation could be defined a division of 16 in this case; division by 8 would be an insufficiently harsh quantisation amount.

For example, for QP<28, the quantiser applies /16 and the quantised DC coefficient for 16x16 is bigger than the value required.

For example, for QP<34, the quantiser applies /32 and the quantised DC coefficient for 32x32 is bigger than the value required.

For example, for QP<40, the quantised DC coefficient for 64x64 is bigger than the value required.

Example embodiments address this potential issue in that for at least those blocks that have just the DC coefficient (corresponding to a number no greater than a threshold number of coefficients of 1) , the quantiser should apply a minimum quantisation, that is optionally block size dependent. Similarly, for blocks that have more than just the DC but no greater than another threshold number (such as 3) of non-zero coefficients, the quantiser can apply a (potentially different) minimum quantisation parameter from which a quantisation degree is determined as discussed above. The quantisation parameter as applied can be different to the quantisation parameter as derived for use with that block.

Another aspect of the test applied here can relate to the location of the non-zero coefficients. For example, the test can detect whether the n (such as 1 or 3) non-zero coefficients are the n lowest frequency (or lowest in a scan or array order starting from DC) coefficients in order to apply the different quantisation parameter.

The test for whether there is at least the threshold number of non-zero values can be made in respect of the values pre-quantisation, which is to say (in the example given above) in respect of the DCT values. Alternatively, the judgement can be made with respect to the quantised data values. The judgement as made refers to the data values in the array order, for example starting (in this example) at DC and progressing towards higher spatial frequency components for example using the scan of Figure 15.

If a corresponding judgement is to be made at the decoder side, in order to apply a corresponding modification of the quantisation parameter for use in determining a quantisation (or dequantisation) degree for use in dequantising, then it can be appropriate to make the judgement based on the same data set, which is to say:
(a) to detect whether the number of *quantised data values* at the encoder, in the array order, has at least the threshold number of non-zero values; and
(b) to detect whether the number of entropy-decoded data values to be dequantised at the decoder, in the array order, has at least the threshold number of non-zero values.

However, in other examples, such as examples in which the quantisation parameter as actually used by the encoder is signalled in or with the encoded data stream, the encoder could be operable instead to detect whether the number of *data values to be quantised* at the encoder, in the array order, has at least the threshold number of non-zero values.

Figure 16 schematically illustrates the use of a discrete sine transform (DST) transformation unit 1600. Although the precise effect is different to the DCT, as with the DCT an expected most significant coefficient will tend to be found in the top left (lowest spatial frequencies) position 1610 of the transformed block 1620. A similar top-left to bottom-right array order to that of Figure 15 may be used for detecting how many first non-zero values are present.

Figure 17 schematically illustrates the use of a so-called transform-skip mode, in which a spatial frequency transformation is selectively not used. The use of transform skip mode is signalled to the decoder by the encoder. However, since the properties of the residual data block can be such that sample positions closest to the reference samples (that is to say, the left and upper edges of the block) may tend to have lower differences by virtue of their proximity to the reference samples, an inversion process 1700 can be used to rotate the sample positions for subsequent encoding (and a corresponding inverse rotation process applied at decoding) so that the sample in the top left position 1710 of the inverted block 1720, the top left position as drawn corresponding to the location of the DC coefficient in a DCT system, is the sample from the bottom right of the residual block, which is to say that sample position furthest from the reference samples. The sample 1710 is expected to have generally the largest value in a transform-skip block. A similar top-left to bottom-right array order to that of Figure 15 may be used for detecting how many first non-zero values are present.

Transform skip operation is discussed section 8.6.2 of The CABAC context modelling and encoding process is described in more detail in SERIES H: AUDIOVISUAL AND MULTIMEDIA SYSTEMS Infrastructure of audiovisual services - Coding of moving video High efficiency video coding Recommendation ITU-T H.265 12/2016. Also: High Efficiency Video Coding (HECV) algorithms and Architectures, Editors: Madhukar Budagavi, Gary J. Sullivan, Vivienne Sze; ISBN 978-3-319-06894-7; 2014 Chap 8 p209-274. For some regions or blocks, coding gains can be achieved by skipping the transform. The residual in the spatial domain is quantised and encoded, in some instances in a reverse spatial order (to align the expected magnitude of spatial differences, greatest in the lower right of the block furthest away from the reference samples, with the expected order of coefficient magnitude in a frequency transformed block (generally greatest at the top left of DC coefficient).

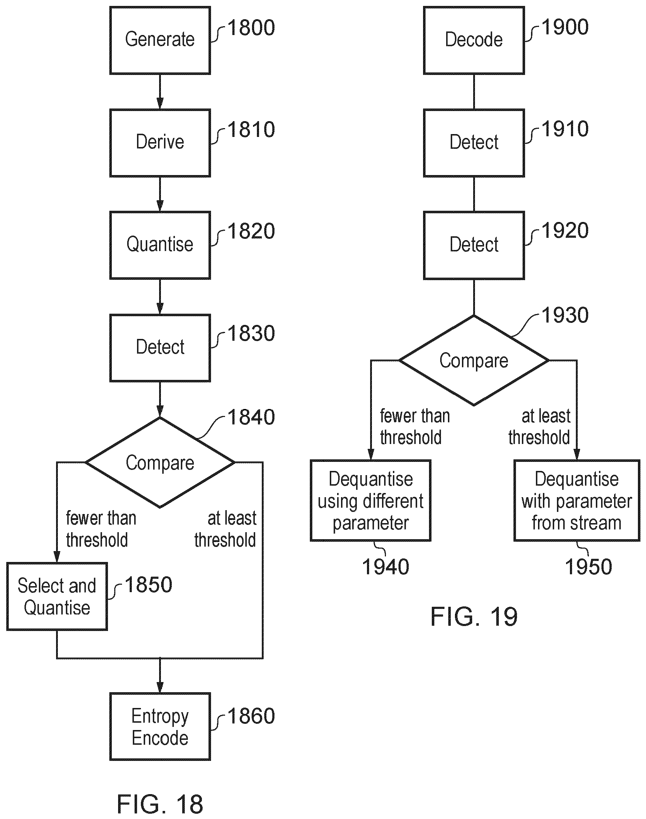

Figure 18 is a schematic flowchart illustrating a data encoding method.

At a step 1800, an ordered array of data values is generated representing an image region and having an array order.

A step 1810 involves deriving a quantisation parameter indicating a quantisation degree so that the ordered array of data values, when encoded using the that quantisation degree, meets one or more predetermined criteria. For example, the predetermined criteria may include a data quantity criterion so that the quantity of encoded data is predicted not to exceed a required data quantity, and/or a quality or error rate criterion.

At a step 1820 the data values are quantised using a quantisation degree indicated by the derived quantisation parameter to generate respective quantised values.

At a step 1830 a number of non-zero quantised values is detected.

The number (and optionally location as mentioned above) of non-zero quantised values is compared to a threshold value or number at a step 1840. If no more than the threshold number of first values in the array order are non-zero, control passes to a step 1850 at which a different quantisation parameter is selected, the data values are quantised using a quantisation degree indicated by the selected different quantisation parameter and control passes to a step 1860. Otherwise, or in other words if at lease the threshold number of first values in the array order are non-zero, control passes directly to the step 1860.

It will be appreciated that a comparison of a number n (of non-zero data values in this example) with a threshold T can be expressed in various ways, all of which are considered to be equivalent for the purposes of the present description. Two examples are as follows:

| Outcome leading to the step 1850 in Figure 18 | Opposite outcome |
|---|---|
| n <= T (n is no greater than the threshold T) | n > T (n is greater than the threshold T) |
| n< T' (where T' = T+1) (n is the threshold T') | n>T' (n is at least the threshold T') |

It will also be appreciated that in some instances the number of non-zero quantised values which would result from the quantisation process could be predicted or detected without actually first quantising the data values. Here, effectively the quantiser is performing v[i]/denominator. The prediction or test can be to check that abs(v[i]) >= denominator (although rounding will modify the actual offset being tested). In such a case, the quantisation step 1820 would be moved to follow the comparison step 1840, so that at either outcome of the comparison step, quantisation takes place, the choice being made by the comparison step as to whether the a quantisation degree indicated by quantisation parameter derived at the step 1810 is used, or a quantisation degree indicated by the different quantisation parameter selected at the step 1850 is used.

At the step 1860, at least the non-zero quantised values are entropy encoded.

As a further variation of Figure 18, it will be appreciated that as discussed above, the detection at the steps 1830, 1840 could in fact be made in respect of the data before quantisation, which would imply repositioning the steps 1830, 1840 to between the steps 1800, 1810, with a quantisation degree indicated by either the derived quantisation parameter at the step 1810 or a selected different quantisation parameter being used at the step 1820.

Figure 19 is a schematic flowchart illustrating a method of decoding a data stream.

At a step 1900, an ordered array of data values having an array order is entropy decoded.

A step 1910 involves detecting a number of non-zero entropy decoded values. At a step 1920, a quantisation parameter is detected from the data stream. Note that the step 1920 can be carried out in any flowchart position relative to the order of the steps 1900, 1910, or indeed in parallel with either of them.

At a step 1930, a number of first entropy decoded values in the array order (the data before dequantisation) is compared with a threshold number. If at least the threshold number are non-zero, control passes to a step 1950 at which the entropy decoded values are dequantised using a quantisation degree indicated by the quantisation parameter from the data stream (which is to say, the parameter provided by the encoder), or otherwise control passes to a step 1940 involving selecting a different quantisation parameter and dequantising the entropy decoded data values using a quantisation degree indicated by the selected different quantisation parameter.

The same considerations apply to the comparison with a threshold as those discussed above.

The discussion above leads to at least two potential example implementations of the present techniques.

In some example implementations, the encoder selects and uses either the derived quantisation parameter (at the step 1810) or the different quantisation parameter (at the step 1850) and encodes to the data stream whichever quantisation parameter it has actually used in the quantisation of the encoded data. In such cases, a conventional decoder may be employed, which simply detects, and uses for dequantisation, a quantisation parameter from the encoded data stream. Another option could be to add one or more additional flags to the datastream to indicate the use of a different quantisation parameter for a particular block size/component/bit depth or the like.

But in other example implementations, the encoder derives a quantisation parameter at the step 1810 and writes the derived quantisation parameter to the data stream even if a different quantisation parameter is actually used to indicate a quantisation degree indicated for actual quantisation at the step 1850. In this case, the method of Figure 19 is relevant, in that the decoder applies the same test (at the corresponding steps 1840, 1930) and also selects the different quantisation parameter if the same conditions apply. In example embodiments, the decoder selects the same different quantisation parameter in these circumstances as that selected at the encoder, for example by applying a corresponding set of criteria or rules determining the selection of the different quantisation parameter.

These arrangements, in which the quantisation parameter actually written to the data stream is not the one used, and in which the selection of the quantisation parameter at the step 1810 is actually over-ridden by both the encoder and the decoder, can be useful in situations in which (for example) the encoding or use of other operational features or parameters depend upon the transmitted quantisation parameter. They can also be useful when the way in which the quantisation parameter is actually transmitted in the data stream itself depends on other parameters which are not altered by the present techniques.

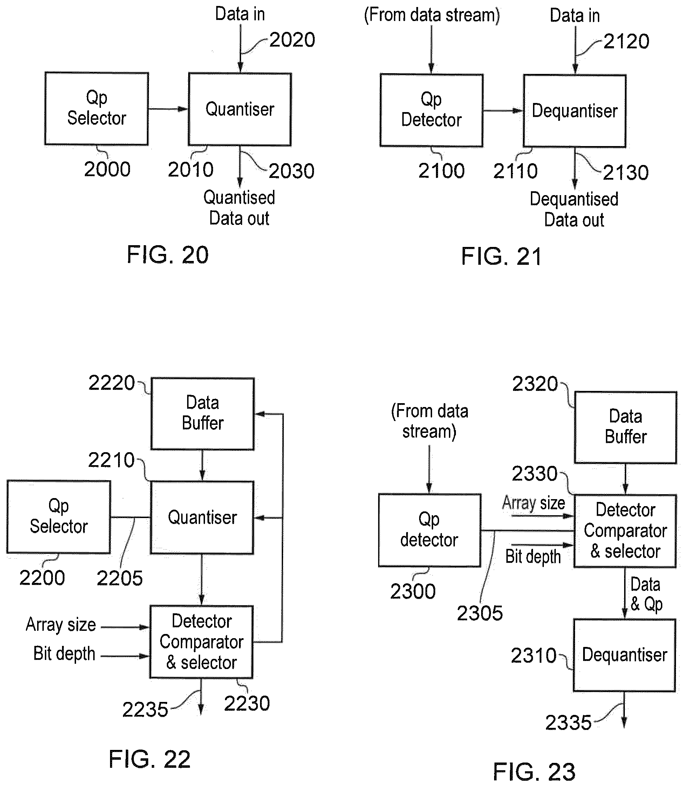

Figure 20 schematically illustrates a previously proposed quantisation arrangement in which a quantisation parameter (Qp) selector 2000 selects a quantisation parameter which is then applied by a quantiser 2010 so that a quantisation degree indicated by the quantisation parameter is used to quantise input data 2020 to generate quantised output data 2030. The selected value of Qp is communicated directly or indirectly (by a dependence upon other data or parameters, for example) in or with the encoded data stream.

At the decoder side, Figure 21 schematically illustrates an arrangement in which a quantisation parameter detector 2100 detects the quantisation parameter encoded in or with the data stream and a dequantiser 2110 applies a quantisation degree indicated by the detected quantisation parameter to input data 2120 to generate dequantised output data 2130.

Applying the techniques discussed above, Figure 22 schematically illustrates a part of an encoder using these techniques.

As before, a quantisation parameter selector 2200 derives an initial quantisation parameter Qpᵢₙᵢₜ which is applied to input data (for example, stored temporarily in a data buffer 2220) by a quantiser 2210.

The quantised data generated by the application of a quantisation degree indicated by the initial quantisation parameter Qpᵢₙᵢₜ is provided to a detector, comparator and selector unit 2230. This unit carries out the operations discussed in connection with the steps 1830, 1840, 1850 of Figure 18. In particular, it detects the number of non-zero data in the quantised data generated by the application of the initial quantisation parameter Qpᵢₙᵢₜ which are first in the array order and compares this number to a threshold number such as 1 or 3. If the number of non-zero data are less than the threshold in use, then a different QP value, QP_{new}, is selected by the unit 2230. The quantiser 2210 and data buffer 2220 are controlled by the unit 2230 to quantise the data again using QP_{new}.

Either in response to a detection that at least the threshold number of non-zero data are present, or in response to requantisation with QP_{new}, the quantised data are output as an output signal 2235.

The selection of Qp_{new} can be made based in various ways and on the basis of various parameters.

In some example, Qp_{new} can represent a constraint on the minimum Qp to be used in a particular situation.

In some examples, Qp_{new} can be selected by a look-up or function based on the array size of the ordered array of data values. For example, due to the scaling of the respective transformation process. different values of Qp_{new} may be applicable to 4x4, 8x8, 16x16, 32x32 or other block sizes. For example, blocks of double the size would typically have double the minimum quantisation scaling value (which, for a HEVC style Qp method, would lead to a Qp increase of 6). So typically a 4x4 DCT scales by sqrt(4*4)=4, and therefore the minimum QP would apply an effective quantisation of at least 4. Here sqrt signifies a square root.

In some examples, Qp_{new} can be selected by a look-up or function based on the bit depth of the image data being handled. For example, different values of Qp_{new} may be applicable to 8 bit data, 9 bit data, 10 bit data, 12 bit data and so on. For example, there could be an increase of Qp of 3 per bit of bit depth over 8 bits.

In some examples, Qp_{new} can be selected by a look-up or function based on the transform type (for example, discrete cosine transform, discrete sine transform, transform skip, non-separable secondary transform and the like) used in the generation of the ordered array of data values.

In some examples, any permutation of two or more of these factors (transform type, array size and bit depth) can be used so that the value of Qp_{new} is obtained by a two-dimensional look-up or a function of both factors.

In any of the above examples, the same process can be carried out at the decoder, so that even if the initial quantisation parameter Qpᵢₙᵢₜ is signalled in or with the data stream, the appropriate Qp_{new} can be obtained and used at the decoder side.

In other examples, the process described above can be carried out iteratively at the encoder, so that a detection by the unit 2230 that there are insufficient non-zero first quantised data values, when Qpᵢₙᵢₜ is used, results in a change in Qp so if that Qp_{new} = Qpᵢₙᵢₜ - delta (where delta is a change amount, which may itself be dependent upon bit depth and/or array size) and the quantisation process is repeated. If there are still insufficient non-zero first quantised data values in the array order, then the change can be applied a further time, or in other words: ${Qp}_{new} \left(2\right) = {Qp}_{new} \left(1\right) - delta ,$ and the process repeated iteratively until the test against the threshold number is passed (which is to say there are sufficient non-zero first quantised data values in the array order), and the final value of Qp_{new} signalled in or with the data stream.

In general, an encoder can try both cases (or if there are multiple conditionals/QPs, it can try all possible outcomes), to detect a Qp for use, making sure that for the trial with the modified quantiser will be detected appropriately by the decoder (for example by blanking off coefficients). Such trials may result in a lower cost in coding (in terms of a balance between bit rate and picture quality).

Figure 23 schematically illustrates an arrangement for use at a decoder, in which entropy-decoded data are held temporarily in a data buffer 2320 and are selectively dequantised by a dequantiser 2310 using a quantisation degree indicated by a quantisation parameter Qpᵢₙᵢₜ signalled in or with the data stream, or with a different value Qp_{new}.

The entropy-decoded data are passed to a detector, comparator and selector unit 2330 which carries out the functionality of the steps 1920, 1930 of Figure 19, so that if there are no more than the threshold number of first non-zero entropy-decoded values in the array order (where the threshold is, for example, 1 or 3), the unit 2330 controls the dequantiser 2310 to perform dequantisation of the entropy-decoded data with a different QP, namely Qp_{new} which is selected (potentially in dependence upon bit depth, array size or both) using the same dependency as the selection process carried out at the encoder side. If the comparison of the step 1930 shows that there are at least the threshold number of non-zero data values, the Qp value 2305 detected by a Qp detector from the data stream is used.

The dequantised data are provided as an output signal 2335 for further processing.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Similarly, a data signal comprising coded data generated according to the methods discussed above (whether or not embodied on a non-transitory machine-readable medium) is also considered to represent an embodiment of the present disclosure.

## Claims

1. A data encoding method comprising:
generating (1800) an ordered array of data values representing an image region and having an array order;
deriving (1810) a quantisation parameter indicating a quantisation degree so that the ordered array of data values, when encoded using that quantisation degree, meets one or more predetermined criteria;
determining that a transform skip mode is to be used where the data values are not subjected to a transform;
detecting (1830) a number of non-zero values as first values in the array order, amongst the ordered array of data values or the ordered array of data values as quantised according to a quantisation degree indicated by the derived quantisation parameter;
when values in the ordered array of data values correspond to sample values in the transform skip mode, and the quantisation degree corresponds to a threshold number, selecting a different quantisation parameter; quantising the data values to generate respective quantised values for the detected non-zero values; and
entropy encoding the quantised values.

2. A method according to claim 1, in which the generating step comprises:
predicting an image region for an image to be encoded; and
generating a residual image region dependent upon the difference between the predicted image region and a corresponding region of the image to be encoded;
in which the ordered array of data values comprises data values of a representation of the residual image region.

3. A method according to claim 2, in which:
the predicting step comprises predicting samples of the image region in dependence upon other previously encoded and decoded image samples, displaced from the predicted samples in a direction defined by a prediction mode; and
the array order is such that predicted data values spatially closer to the other previously encoded and decoded image samples are earlier in the array order.

4. A method according to claim 1, in which the one or more predetermined criteria comprise at least a data quantity criterion.

5. A method according to claim 1, in which the threshold number is 1.

6. A method according to claim 1, in which the threshold number is 3.

7. A method according to claim 1, in which i) the selected different quantisation parameter depends on an array size of the ordered array of data values; or ii) the selected different quantisation parameter depends on a bit depth of the ordered array of data values.

8. A method of decoding a data stream, the method comprising:
entropy decoding an ordered array of data values having an array order;
detecting that a transform skip mode has been used wherein the data values are not subjected to a transform;
detecting a number of non-zero entropy decoded values;
detecting a quantisation parameter from the data stream;
when values in the ordered array of data values correspond to sample values in the transform skip mode, if a quantisation degree meets a threshold number dequantising the entropy decoded values using a quantisation degree indicated by the quantisation parameter from the data stream, or otherwise selecting a different quantisation parameter and dequantising the entropy decoded data values using a quantisation degree indicated by the selected different quantisation parameter for the detected non-zero entropy decoded values.

9. A method according to claim 8, wherein the different quantisation parameter selected is based on a function which is used when the transform skip mode is detected.

10. Computer software which, when executed by a computer, causes the computer to perform the method of claim 1 or claim 8.

11. A non-transitory machine-readable storage medium which stores computer software according to claim 10.

12. A data encoding apparatus configured to encode an ordered array of data values representing an image region and having an array order, the apparatus comprising:
a quantisation parameter generator configured to derive a quantisation parameter indicating a quantisation degree so that the ordered array of data values, when encoded using that quantisation degree, meets one or more predetermined criteria;
detecting a number of non-zero values as first values in the array order, amongst the ordered array of data values or the ordered array of data values as quantised according to a quantisation degree indicated by the derived quantisation parameter;
a controller configured to determine that a transform skip mode is to be used where the data values are not subjected to a transform; and
when values in the ordered array of data values correspond to sample values in the transform skip mode, and the quantisation degree corresponds to a threshold number, to select a different quantisation parameter;
a quantiser configured to quantise the data values to generate respective quantised values for the detected non-zero values;
and
an entropy encoder configured to entropy encode the quantised values.

13. Video storage, capture, transmission or reception apparatus comprising apparatus according to claim 12.

14. Apparatus for decoding a data stream, the apparatus comprising:
an entropy decoder configured to entropy decode an ordered array of data values having an array order;
a detector configured to detect that a transform skip mode has been used wherein the data values are not subjected to a transform; and to detect a number of non-zero entropy decoded values and detect a quantisation parameter from the data stream;
a dequantiser configured to, when values in the ordered array of data values correspond to sample values in the transform skip mode, if a quantisation degree meets a threshold number, dequantise the entropy decoded values using a quantisation degree indicated by the quantisation parameter from the data stream , or otherwise to select a different quantisation parameter and to dequantise the entropy decoded data values using a quantisation degree indicated by the selected different quantisation parameter for the detected non-zero entropy decoded values.

15. Video storage, capture, transmission or reception apparatus comprising apparatus according to claim 14.

## Patentansprüche

1. Datenkodierungsverfahren, umfassend:
Erzeugen (1800) eines geordneten Arrays von Datenwerten, die einen Bildbereich darstellen und eine Array-Reihenfolge aufweisen;
Ableiten (1810) eines Quantisierungsparameters, der einen Quantisierungsgrad angibt, sodass das geordnete Array von Datenwerten, wenn es unter Verwendung dieses Quantisierungsgrades kodiert wird, ein oder mehrere zuvor bestimmte Kriterien erfüllt;
Bestimmen, dass ein Transformationsüberspringungsmodus zu verwenden ist, wobei die Datenwerte keiner Transformation unterzogen werden;
Erkennen (1830) einer Anzahl von Werten ungleich Null als erste Werte in der Reihenfolge des Arrays unter dem geordneten Array von Datenwerten oder dem geordneten Array von Datenwerten, wie sie gemäß einem durch den abgeleiteten Quantisierungsparameter angegebenen Quantisierungsgrad quantisiert sind;
wenn Werte in dem geordneten Array von Datenwerten Abtastwerten in dem Transformationsüberspringungsmodus entsprechen und der Quantisierungsgrad einer Schwellenwertzahl entspricht, Auswählen eines anderen Quantisierungsparameters; Quantisieren der Datenwerte, um jeweilige quantisierte Werte für die erfassten Werte ungleich Null zu erzeugen; und
Entropiekodieren der quantisierten Werte.

2. Verfahren nach Anspruch 1, wobei der Erzeugungsschritt Folgendes umfasst:
Vorhersagen eines Bildbereichs für ein zu kodierendes Bild; und
Erzeugen eines Restbildbereichs abhängig von der Differenz zwischen dem vorhergesagten Bildbereich und einem entsprechenden Bereich des zu kodierenden Bildes;
wobei das geordnete Array von Datenwerten Datenwerte einer Darstellung des Restbildbereichs umfasst.

3. Verfahren nach Anspruch 2, wobei:
der Vorhersageschritt das Vorhersagen von Abtastwerten des Bildbereichs in Abhängigkeit von anderen zuvor kodierten und dekodierten Bildabtastwerten umfasst, die gegenüber den vorhergesagten Abtastwerten in einer durch einen Vorhersagemodus definierten Richtung verschoben sind; und
die Array-Reihenfolge derart ist, dass vorhergesagte Datenwerte, die räumlich näher an den anderen zuvor kodierten und dekodierten Bildabtastwerten liegen, in der Array-Reihenfolge weiter vorne stehen.

4. Verfahren nach Anspruch 1, wobei das eine oder die mehreren vorbestimmten Kriterien mindestens ein Datenmengenkriterium umfassen.

5. Verfahren nach Anspruch 1, wobei die Schwellenzahl 1 ist.

6. Verfahren nach Anspruch 1, wobei die Schwellenzahl 3 ist.

7. Verfahren nach Anspruch 1, wobei i) der ausgewählte unterschiedliche Quantisierungsparameter von einer Array-Größe des geordneten Arrays von Datenwerten abhängt. oder ii) der ausgewählte unterschiedliche Quantisierungsparameter von einer Bittiefe des geordneten Arrays von Datenwerten abhängt.

8. Verfahren zum Dekodieren eines Datenstroms, das Verfahren umfassend:
Entropiedekodieren eines geordneten Arrays von Datenwerten mit einer Array-Reihenfolge;
Erkennen, dass ein Transformationsüberspringungsmodus verwendet worden ist, wobei die Datenwerte keiner Transformation unterzogen werden;
Erkennen einer Anzahl von entropiedekodierten Werten ungleich Null;
Erkennen eines Quantisierungsparameters aus dem Datenstrom;
wenn Werte in dem geordneten Array von Datenwerten Abtastwerten im Transformationsüberspringungsmodus entsprechen, falls ein Quantisierungsgrad eine Schwellenwertzahl erfüllt, Dequantisieren der entropiedekodierten Werte unter Verwendung eines Quantisierungsgrads, der durch den Quantisierungsparameter aus dem Datenstrom angegeben wird, oder andernfalls Auswählen eines anderen Quantisierungsparameters und Dequantisieren der entropiedekodierten Datenwerte unter Verwendung eines Quantisierungsgrads, der durch den ausgewählten anderen Quantisierungsparameter für die detektierten entropiedekodierten Werte ungleich Null angegeben wird.

9. Verfahren nach Anspruch 8, wobei der unterschiedliche ausgewählte Quantisierungsparameter auf einer Funktion basiert, die verwendet wird, wenn der Transformationsüberspringungsmodus detektiert wird.

10. Computersoftware, die, wenn sie von einem Computer ausgeführt wird, den Computer veranlasst, das Verfahren nach Anspruch 1 oder 8 durchzuführen.

11. Nichtflüchtiges maschinenlesbares Speichermedium, das Computersoftware nach Anspruch 10 speichert.

12. Datenkodierungseinrichtung, die konfiguriert ist, um einen geordneten Array von Datenwerten zu kodieren, die einen Bildbereich darstellen und eine Array-Reihenfolge aufweisen, die Einrichtung umfassend:
einen Quantisierungsparametergenerator, der konfiguriert ist, um einen Quantisierungsparameter abzuleiten, der einen Quantisierungsgrad angibt, sodass das geordnete Array von Datenwerten, wenn es unter Verwendung dieses Quantisierungsgrades codiert wird, ein oder mehrere zuvor bestimmte Kriterien erfüllt;
Erkennen einer Anzahl von Werten ungleich Null als erste Werte in der Reihenfolge des Arrays unter dem geordneten Array von Datenwerten oder dem geordneten Array von Datenwerten, wie sie gemäß einem durch den abgeleiteten Quantisierungsparameter angegebenen Quantisierungsgrad quantisiert sind;
eine Steuerung, die konfiguriert ist, um zu bestimmen, dass ein Transformationsüberspringungsmodus zu verwenden ist, wobei die Datenwerte keiner Transformation unterzogen werden; und
wenn Werte in dem geordneten Array von Datenwerten Abtastwerten in dem Transformationsüberspringungsmodus entsprechen und der Quantisierungsgrad einer Schwellenwertzahl entspricht, Auswählen eines anderen Quantisierungsparameters;
ein Quantisierer, der konfiguriert ist, um die Datenwerte zu quantisieren, um jeweilige quantisierte Werte für die erfassten Werte ungleich Null zu erzeugen;
und
einen Entropiekodierer, der für ein Entropiekodieren der quantisierten Werte konfiguriert ist.

13. Videospeicher-, Aufnahme-, Übertragungs- oder Empfangseinrichtung, umfassend eine Einrichtung nach Anspruch 12.

14. Einrichtung zum Dekodieren eines Datenstroms, die Einrichtung umfassend:
einen Entropiedekodierer, der konfiguriert ist, um ein geordnetes Array von Datenwerten mit einer Array-Reihenfolge entropiezudekodieren;
einen Detektor, der konfiguriert ist, um zu detektieren, dass ein Transformationsüberspringungsmodus verwendet wurde, wobei die Datenwerte keiner Transformation unterzogen werden; und um eine Anzahl von Werten mit einer Entropie ungleich Null zu erkennen und einen Quantisierungsparameter aus dem Datenstrom zu erkennen;
einen Dequantisierer, der konfiguriert ist, um, wenn Werte in dem geordneten Array von Datenwerten Abtastwerten im Transformationsüberspringungsmodus entsprechen, falls ein Quantisierungsgrad eine Schwellenwertzahl erfüllt, die entropiedekodierten Werte unter Verwendung eines Quantisierungsgrades zu dequantisieren, der durch den Quantisierungsparameter aus dem Datenstrom angegeben wird, oder andernfalls einen anderen Quantisierungsparameter auszuwählen und die entropiedekodierten Datenwerte unter Verwendung eines Quantisierungsgrades zu dequantisieren, der durch den ausgewählten anderen Quantisierungsparameter für die detektierten entropiedekodierten Werte ungleich Null angegeben wird.

15. Videospeicher-, Aufnahme-, Übertragungs- oder Empfangseinrichtung, umfassend eine Einrichtung nach Anspruch 14.

## Revendications

1. Procédé d'encodage de données comprenant :
la génération (1800) d'un tableau ordonné de valeurs de données représentant une région d'image et ayant un ordre de tableau ;
la dérivation (1810) d'un paramètre de quantification indiquant un degré de quantification de sorte que le tableau ordonné de valeurs de données, lorsqu'il est encodé à l'aide de ce degré de quantification, respecte un ou plusieurs critères prédéterminés ;
la détermination qu'un mode de saut de transformée doit être utilisé dans lequel les valeurs de données ne sont pas soumises à une transformée ;
la détection (1830) d'un nombre de valeurs non nulles en tant que premières valeurs dans l'ordre de tableau, parmi le tableau ordonné de valeurs de données ou le tableau ordonné de valeurs de données tel que quantifié selon un degré de quantification indiqué par le paramètre de quantification dérivé ;
lorsque des valeurs dans le tableau ordonné de valeurs de données correspondent à des valeurs d'échantillon dans le mode de saut de transformée, et que le degré de quantification correspond à un nombre seuil, la sélection d'un paramètre de quantification différent ; la quantification des valeurs de données pour générer des valeurs quantifiées respectives pour les valeurs non nulles détectées ; et
l'encodage entropique des valeurs quantifiées.

2. Procédé selon la revendication 1, dans lequel l'étape d'application comprend :
la prédiction d'une région d'image pour une image à encoder ; et
la génération d'une région d'image résiduelle dépendant de la différence entre la région d'image prédite et une région correspondante de l'image à encoder ;
dans lequel le tableau ordonné de valeurs de données comprend des valeurs de données d'une représentation de la région d'image résiduelle.

3. Procédé selon la revendication 2, dans lequel :
l'étape de prédiction comprend la prédiction d'échantillons de la région d'image en fonction d'autres échantillons d'image précédemment codés et décodés, déplacés par rapport aux échantillons prédits dans une direction définie par un mode de prédiction ; et
l'ordre du tableau est tel que les valeurs de données prédites spatialement plus proches des autres échantillons d'image précédemment codés et décodés sont antérieures dans l'ordre du tableau.

4. Procédé selon la revendication 1, dans lequel le ou les critères prédéterminés comprennent au moins un critère de quantité de données.

5. Procédé selon la revendication 1, dans lequel le nombre seuil vaut 1.

6. Procédé selon la revendication 1, dans lequel le nombre de seuil vaut 3.

7. Procédé selon la revendication 1, dans lequel i) le paramètre de quantification différent sélectionné dépend de la taille de tableau du tableau ordonné de valeurs de données ; ou ii) le paramètre de quantification différent sélectionné dépend d'une profondeur de bits du tableau ordonné de valeurs de données.

8. Procédé de décodage d'un flux de données, le procédé comprenant :
le décodage entropique d'un tableau ordonné de valeurs de données ayant un ordre de tableau ;
la détection qu'un mode de saut de transformée a été utilisé dans lequel les valeurs de données ne sont pas soumises à une transformée ;
la détection d'un nombre de valeurs de décodage entropique différentes de zéro ;
la détection d'un paramètre de quantification à partir du flux de données ;
lorsque des valeurs dans le réseau ordonné de valeurs de données correspondent à des valeurs d'échantillon dans le mode de saut de transformée, si un degré de quantification atteint un nombre seuil, la déquantification des valeurs décodées par entropie à l'aide d'un degré de quantification indiqué par le paramètre de quantification provenant du flux de données, ou sinon la sélection d'un paramètre de quantification différent et la déquantification des valeurs de données décodées par entropie à l'aide d'un degré de quantification indiqué par le paramètre de quantification différent sélectionné pour les valeurs décodées par entropie non nulles détectées.

9. Procédé selon la revendication 8, dans lequel le paramètre de quantification différent sélectionné est basé sur une fonction qui est utilisée lorsque le mode de saut de transformée est détecté.

10. Programme d'ordinateur qui, lorsqu'il est exécuté par un ordinateur, amène l'ordinateur à effectuer le procédé selon la revendication 1 ou la revendication 8.

11. Support de stockage non transitoire lisible par machine qui stocke un logiciel informatique selon la revendication 10.

12. Appareil de codage de données configuré pour coder un tableau ordonné de valeurs de données représentant une région d'image et ayant un ordre de tableau, l'appareil comprenant :
un générateur de paramètre de quantification configuré pour dériver un paramètre de quantification indiquant un degré de quantification de sorte que le tableau ordonné de valeurs de données, lorsqu'il est encodé à l'aide de ce degré de quantification, respecte un ou plusieurs critères prédéterminés ;
la détection d'un certain nombre de valeurs non nulles en tant que premières valeurs dans l'ordre du tableau, parmi le tableau ordonné de valeurs de données ou le tableau ordonné de valeurs de données tel que quantifié selon un degré de quantification indiqué par le paramètre de quantification dérivé ;
un dispositif de commande configuré pour déterminer qu'un mode de saut de transformée doit être utilisé dans lequel les valeurs de données ne sont pas soumises à une transformée ; et
lorsque des valeurs dans le tableau ordonné de valeurs de données correspondent à des valeurs d'échantillon dans le mode de saut de transformée, et que le degré de quantification correspond à un nombre seuil, de sélectionner un paramètre de quantification différent ;
un quantificateur configuré pour quantifier les valeurs de données afin de générer des valeurs quantifiées respectives pour les valeurs non nulles détectées ;
et
un encodeur entropique configuré pour effectuer un encodage entropique des valeurs quantifiées.

13. Appareil de stockage, capture, transmission ou réception vidéo comprenant l'appareil selon la revendication 12.

14. Appareil permettant de décoder un flux de données, l'appareil comprenant :
un décodeur entropique configuré pour décoder de manière entropique un tableau ordonné de valeurs de données ayant un ordre de tableau ;
un détecteur configuré pour détecter qu'un mode de saut de transformée a été utilisé dans lequel les valeurs de données ne sont pas soumises à une transformée ; et pour détecter un nombre de valeurs de décodage entropique différentes de zéro et pour détecter un paramètre de quantification à partir du flux de données ;
un déquantificateur configuré pour, lorsque des valeurs dans le tableau ordonné de valeurs de données correspondent à des valeurs d'échantillon dans le mode de saut de transformée, si un degré de quantification atteint un nombre seuil, déquantifier les valeurs décodées par entropie à l'aide d'un degré de quantification indiqué par le paramètre de quantification provenant du flux de données, ou sinon pour sélectionner un paramètre de quantification différent et pour déquantifier les valeurs de données décodées par entropie à l'aide d'un degré de quantification indiqué par le paramètre de quantification différent sélectionné pour les valeurs décodées par entropie non nulles détectées.

15. Appareil de stockage, capture, transmission ou réception vidéo comprenant l'appareil selon la revendication 14.
